# EUROPEAN PATENT SPECIFICATION

(11) **EP 2 422 175 B1**
(45) Date of publication and mention of the grant of the patent: **28.11.2018**
(21) Application number: 09843732.0
(22) Date of filing: 24.04.2009
(51) Int. Cl.: G01L 5/28, B60T 17/22

(54) **A METHOD AND A SYSTEM FOR TESTING THE BRAKING CAPACITY OF ONE OR MORE BRAKE ELEMENTS OF A VEHICLE**
VERFAHREN UND SYSTEM ZUM PRÜFEN DER BREMSKAPAZITÄT EINES ODER MEHRERER BREMSELEMENTE EINES FAHRZEUGS
PROCÉDÉ ET SYSTÈME POUR TESTER LA CAPACITÉ DE FREINAGE D'UN OU PLUSIEURS ÉLÉMENTS DE FREIN D'UN VÉHICULE

(43) Date of publication of application: 29.02.2012
(73) Proprietor: Volvo Construction Equipment AB, 631 85 Eskilstuna (SE)
(72) Inventor: Eliasson, Göran, deceased (SE)
(74) Representative: Volvo Technology Corporation
(86) International application number: PCT/SE2009/000215
(87) International publication number: WO 2010/123412

(56) References cited:
- EP-A2- 1 253 056
- WO-A2-2005/066057
- US-A1- 2009 198 406
- US-B1- 6 651 494

## Description

### TECHNICAL FIELD

The invention relates to a method for testing the braking capacity of one or more brake elements of a vehicle according to the preamble of claim 1. The invention also relates to a system for testing the braking capacity of one or more brake elements of a vehicle according to the preamble of claim 12.

Although the invention can be applied to many different vehicles provided with brakes, the invention is particularly useful for working machines, such as for example frame-steered articulated haulers and wheel loaders. The invention will be exemplified in the following description for a frame-steered articulated hauler.

### BACKGROUND OF THE INVENTION

EP 1 253 056 A2 shows a method and apparatus for diagnosing an electrically operated brake in a vehicle with automatic transmission. A creep torque is applied while the brake pedal is depressed. A test drive force is applied while the brake pedal is depressed. If the vehicle nonetheless moves, an alarm is emitted. D1 also shows a control program.

The term "working machine" comprises different types of material handling vehicles. Such a working machine is provided with a bucket, container or other type of implement for lifting, carrying and/or transporting a load. A working machine may be operated with large and heavy loads in areas where there are no roads, for example for transports in connection with road or tunnel building, sand pits, mines and similar environments. The working machines are thus designed for and used in rough off-road surroundings. For driving downhill or with a fully loaded working machine, particularly at high speeds, e.g. 50 km/h, high efficiency brakes are required.

There is an increasing demand for brake tests. Current brake tests stipulate that the vehicle drives at a predefined speed on a road. The brakes are applied exactly when the vehicle crosses a first line on the road and the vehicle should have stopped before crossing a second line. The procedure is inherently inaccurate as the operator starts braking when the operator thinks the vehicle to have crossed the first line which may differ from the instant when the vehicle effectively crosses the line.

### SUMMARY OF THE INVENTION

It is an object of the invention to provide a brake test method of the kind mentioned in the introduction herein, which method has improved accuracy relative to the prior art brake test method where the vehicle is stopped by braking the vehicle from a predefined speed.

The object is achieved by a method according to claim 1.

By the method according to the invention the reliability and the safety will be improved. The brake test is accomplished when the working machine stands still which implies that the operator does not need to apply any brake when crossing a line. In fact, the operator does not need to apply any brake at all since the brake element is automatically activated by applying a predetermined brake force. This is preferably accomplished by means of a control unit. Thereby a well defined brake force can be used. This brake force corresponds to a certain braking moment which in turn is dependent on the current condition of the brake element. By increasing the torque from the power source a well defined limit where the maximum brake torque of the brake element is reached can be detected.

Although the invention will be exemplified by describing a brake element arranged at a wheel of the working machine, which brake element acts on the wheel or a component which rotates together with the wheel, such as a brake disc, it is stressed that it would also be possible to perform the test with respect to a braked rotation component arranged at another position of the drive line of the working machine.

The method according to the invention can be accomplished for measuring the brake performance of the entire brake system of the vehicle as well as the brake performance of individually brake elements acting on individual wheels.

Individual brake element performance tests are particularly advantageous when the current wheel is individually driven, for example by an electric hub motor or by a hydrostatic device.

The brake test is also safer since the test is accomplished when the working machine stands still and the test can be cut off as soon as the working machine starts to move.

A further advantage is that the service and maintenance for the brake system of the vehicle may become more predictable and may reduce the need for unscheduled service. The method may enable a less time consuming brake test. Furthermore, data on the brake performance status can be collected and provided to a diagnosis system during for example brake and vehicle service in a workshop.

The test sequence can be initiated by an operator of the vehicle by operating an actuator such as a switch or the like. It is also possible that a vehicle control system suggests a brake test when the vehicle is started or depending on the usage time of the vehicle. The brake test can start if the operator confirms to start the brake test.

Although the method may comprise that the operator of the working machine pushes an accelerator during the test sequence in order to increase the torque of the power source, according to another embodiment of the invention the method comprises the step of automatically driving the power source to achieve the decision torque level after applying the predetermined brake force. This is preferably accomplished by means of the control unit. Hereby the test will be even more independent of any action made by the operator. For example, the torque can be increased with the same speed, and/or in accordance with a predetermined pattern and/or to different predetermined levels, etc. Of course in such a case the system used will preferably have any safety function enabling the test to be automatically cut off and/or interrupted by the operator if the working machine starts to accelerate. For example, the test can be accomplished as long as the accelerator is activated by the operator, although the increase of the torque from the power source is automatically controlled, and/or the test can be cut off if the operator activates a brake pedal.

Preferably, the test sequence is rated as passed when no motion is detected and rated as failed when a motion is detected. Detecting a motion preferably means any indication that the vehicle or the at least one ground engagement element is moving when the test sequence is performed.

The test can be started from the power source being at standstill, idling or in an operational state with an output torque which is below the predetermined torque level applied during the test.

The power source can be any device which provides propulsion energy to the vehicle, such as a combustion engine, an electric motor or the like or any combination thereof. It is also possible to drive the ground engagement elements individually.

Generally, the term "ground engagement elements" can include wheels, caterpillar tracks etc.

The decision torque level can preferably be defined so that the vehicle is fulfilling what is defined as good brake performance. Conveniently, the decision torque level can be chosen to be a little bit lower than a maximum nominal performance which can be achieved with the brake system under test under optimum conditions, for example 5-40%, or preferably 20-25% lower than such a maximal nominal value.

Said at least one brake element can be a service brake such as a wheel brake or a parking brake. The "brake force" corresponds to the contact force between a stationary component and a rotation component to be braked. The force can be applied mechanically or by a brake fluid, or in any other suitable way depending on the current type of brake to be tested. The brake element can be arranged in any suitable position of the drive line of the working machine, i.e. not necessarily close to a wheel. Thus, the "brake force" is a value which indicates to which extent the brake is activated and indicates the expected brake moment of the brake.

Said at least one brake element can for example be a part of a wet or a dry brake system. In a wet brake system, typically stationary disks and rotation disks are pressed against each other when subjected to a brake force so as to brake a wheel. Such an arrangement is arranged in a closed environment filled with a liquid such as oil. In a dry brake system, a brake calliper and brake pads acting on a brake disk are surrounded by air.

Further preferred method steps comprise: applying an intermediate torque level which is smaller than the decision torque level before applying the decision torque level; determining a motion of the vehicle and/or of the at least one ground engagement element when the intermediate torque level is applied; rating the test sequence as passed when no motion is detected and rating the test sequence as failed when a motion is detected; applying the decision torque only if the test sequence is rated passed.

The intermediate torque level can be defined to secure that the vehicle is safe to operate and the brake performance is within a defined margin which fulfils predefined requirements, such as certification requirements. The decision torque level can preferably be defined so that the vehicle is fulfilling what is defined as good brake performance. Conveniently, the decision torque level can be chosen to be a little bit lower than a maximum nominal performance which can be achieved with the brake system under test under optimum conditions. This two stage brake test takes into account that the brake performance can degrade during use of the vehicle but stay within a tolerable range.

A further favourable method step comprises performing the test sequence for each brake element of the vehicle; calculating a total brake performance based on results of the test sequences for each brake element. This is favourable if the vehicle is equipped with an ABS system (ABS = antilock brake system) where each single brake element can be controlled individually. It can be detected, for instance, if a particular brake element is subject to stronger wear than other brake elements and thereby will have reduced performance faster than other brake elements.

A further preferred method step comprises collecting results of test sequences for providing performance results for monitoring aging of the at least one brake element and/or for providing performance results to a maintenance unit. The performance of the brake system can be monitored as a function of time. Service intervals can be adjusted and planned according to actual needs. Unnecessary time consuming service can be avoided and in the same instance service can be done when it is detected that one or more brake elements start to loose performance. The brake test yields high quality data on the brake element performance and/or the brake system performance which can be used during maintenance of the vehicle.

A further preferred method step comprises emitting a performance status based on results of the test sequences for each brake element to an operator. The operator can receive actual information about the status of the vehicle's brake system. For instance, if a two stage brake test is performed, and the test with the intermediate torque level is passed but the test with the decision torque level is failed, the operator may receive visual and/or audible information that the vehicle is safe to use but may need service before a certain date. If the test with both the intermediate torque level and the decision torque level is passed the operator may receive the information that the brake system has good performance. If only a one stage test with only the decision torque level is performed, the operator may receive information that either the brake system needs service, if the test failed, or that the brake system has good performance, if the test was successful.

The invention also relates to a system according to claim 12.

Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples.

In the drawings:
- Fig. 1: is a side view of a working machine in the form of an articulated hauler provided with the system according to the invention,
- Fig. 2: is a schematic illustration of a system according to the invention,
- Fig. 4: is a flow chart of the steps of the method according to the invention,
- Fig. 5: is a graph illustrating different torque levels during a test sequence, and
- Fig. 6: is a flow chart of the steps of a further embodiment of the method according to the invention.

### DETAILED DESCRIPTION OF PREFERRED EMBODIMENTS OF THE INVENTION

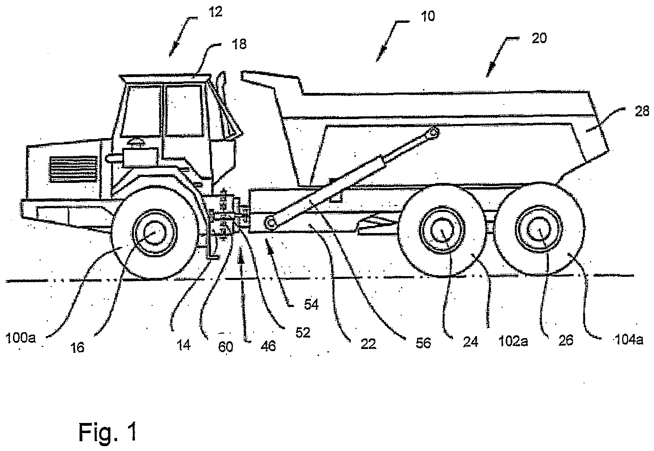

Fig. 1 depicts a side view of a vehicle 10 in the form of a frame-steered articulated hauler, to which the method according to the invention can be implemented for testing the brake system.

In the drawings, equal or similar elements are referred to by equal reference numerals. The drawings are merely schematic representations, not intended to portray specific parameters of the invention. Moreover, the drawings are intended to depict only typical embodiments of the invention and therefore should not be considered as limiting the scope of the invention.

The vehicle 10 embodied as a frame-steered articulated hauler comprises a front vehicle section 12 comprising a front frame 14, a front axle 16 and a cab 18 for a driver. The vehicle 10 also comprises a rear vehicle section 20 comprising a rear frame 22, a front axle 24, a rear axle 26 and a tiltable container 28.

The front and rear axles 24, 26 of the rear vehicle section 20 are connected to the rear frame 22 via a bogie arrangement (not shown), and will below be referred to as front bogie axle 24 and rear bogie axle 26.

Each of the front axles 16, the front bogie axle 24 and the rear bogie axle 26 comprises pairwise left and right ground engagement elements, by way of example in the form of wheels. Only the left ground engagement elements 100a, 102a, 104a are depicted. Generally, the term "ground engagement elements" includes wheels, caterpillar tracks etc. By way of example, the ground engagement elements are called wheels and referred to with the same reference numerals in the embodiments.

The front frame 14 is connected to the rear frame 22 via a first rotary joint 46 which allows the front frame 14 and the rear frame 22 to be rotated relative to one another about a vertical axis 60 for steering (turning) the vehicle 10. A pair of hydraulic cylinders 52 is arranged on respective sides of the rotary joint 46 for steering the vehicle 10. The hydraulic cylinders are controlled by the driver of the vehicle via a steering wheel and/or a joystick (not shown).

A second rotary joint 54 is adapted in order to allow the front frame 14 and the rear frame 22 to be rotated relative to one another about a longitudinal axis, that is to say an axis which extends in the longitudinal direction of the vehicle 10.

The container 28 is connected to the rear frame 22 via an articulation (not shown), on a rear portion of the rear frame 22. A pair of tilting cylinders 56 is connected with a first end to the rear frame 22 and connected with a second end to the container 28. The tilting cylinders 56 are positioned one on each side of the central axis of the vehicle 10 embodied as a frame-steered articulated hauler in its longitudinal direction. The container 28 is therefore tilted in relation to the rear frame 22 on activation of the tilting cylinders 56.

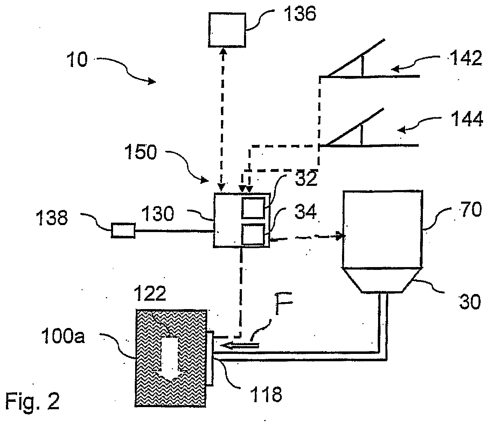

Fig. 2 is a schematic illustration of a system 150 for testing the braking capacity of one or more brake elements of a vehicle according to the invention. This system can be arranged in the vehicle 10 depicted in Fig. 1. The system 150 can be used for accomplishing the method for testing the braking capacity of one or more brake elements 118 according to the invention. As an example a brake element 118 arranged for braking a rotation component in the form of a wheel 100a is schematically illustrated.

The system 150 comprises a control unit 130 for activating said at least one brake element 118 by applying a predetermined brake force F. The predetermined brake force F is automatically applied after activation of the system, i.e. the operator of the working machine does not need to push a brake pedal to apply the requisite brake force. The system 150 preferably comprises an actuator 138 for activating the system 150. The system further comprises a detection means 34 for determining whether or not there is a motion of the vehicle 10 and/or of said at least one ground engagement element '100a when a decision torque level (Φd) is provided by a power source 70, i.e. is applied to the rotation component. The decision torque level (Φd) should be indicative for the braking capacity of said at least one brake element 118 when said predetermined brake force F is applied.

In addition to control the brake force, the control unit 130 is preferably arranged to control the power source 70 for achieving the requisite torque. The motion of the vehicle 10 is indicated by an arrow 122. The system can also comprise a display unit 136 for displaying a performance status based on results of the test sequences for a brake element 118 tested to an operator. The display unit can be a screen, and/or a loudspeaker system or the like. Also a monitor unit 32 can be arranged for storing performance data of brake tests in order to make these data accessible for maintenance and service.

Before initiating the test, the power source 70 is preferably in an idling or a stop state and the vehicle 10 is stationary. The brake test starts when the operator activates the system 150 by operating the actuator 138, for example a push button, a lever, a switch or the like. In addition, the gearing of the main transmission 30 of the power source 70 has to be put into an engaged operational state to deliver torque to the wheel 100a.

The system 150 can activate one or more of the brake elements 118 for braking the vehicle in order to prevent the vehicle from moving. Then the power source 70 is driven to provide the requisite output torque and controlled for example by an accelerator 142 operated by the operator. In another embodiment the power source 70 is automatically controlled to the requisite torque by means of the control unit 130 without any action from the operator such as pushing the accelerator 142.

In a first alternative, the power source 70 is driven to achieve a decision torque level Φd. The torque level is chosen in a way to be indicative of the brake performance when the current brake force F is applied. Alternatively, the system 150 can drive the power source 70 in a first step to achieve an intermediate torque level Φi, which is below the decision torque level Φd and in a subsequent step to the higher decision torque level Φd.

As soon as the vehicle 10 shows any indication of motion, the test sequence is aborted. The system can also be designed to allow test sequence to be aborted if the operator releases the pressure from the accelerator 142 and/or operates the brake pedal 144 and/or turns off the system 150.

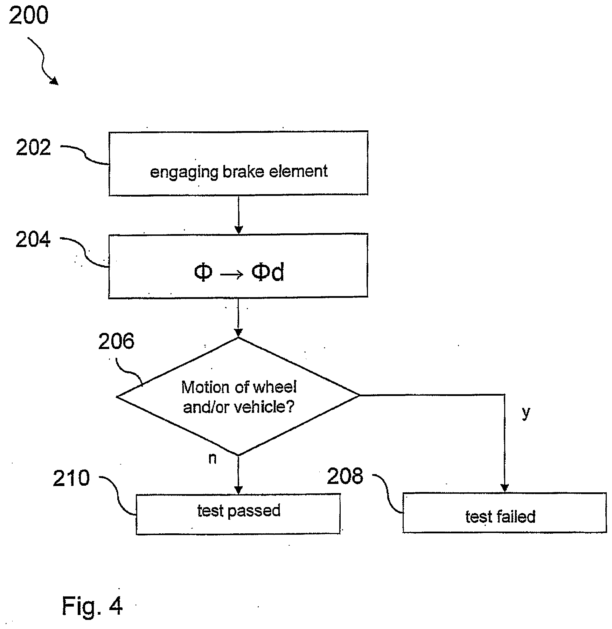

The flow chart 200 in Fig. 4 depicts a first alternative of the brake test method according to the invention for a vehicle 10 depicted by way of example in Fig. 1 and 2. When the operator activates the system 150 by operating the actuator 138, the system 150 activates the brake element 118 under test in step 202 by applying a predetermined brake force. The power source 70 is preferably idling or stopped and the vehicle 10 and the ground engagement elements 100a, 102a, 104a are in a stationary state.

Then in step 204, the power source 70 is driven to achieve a predetermined torque level corresponding to a decision torque level Φd applied on the wheel. The decision torque level Φd is preferably slightly below the brake moment which can be expected to be provided by the brake element 118 under optimum conditions.

In step 206 it is determined whether or not a motion of the vehicle 10 and/or of the ground engagement element 100a with the brake element 118 under test occurs when the decision torque level Φd is applied to the ground engagement element 100a. If no motion of the vehicle 10 or the ground engagement element 100a is detected ("n" in the flow chart) it is decided that the performance of the brake element 118 under test is good and within the desired limits according to step 210. If the vehicle 10 and/or the ground engagement element 100a has moved ("y" in the flow chart), the brake element 118 has failed the test in step 208 and the test sequence is aborted.

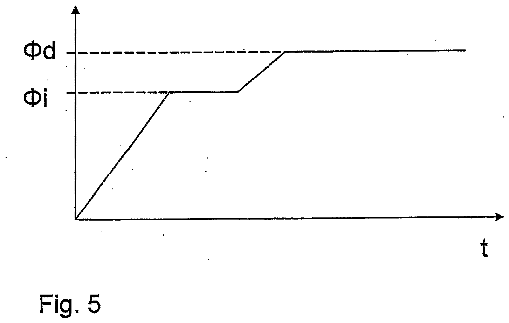

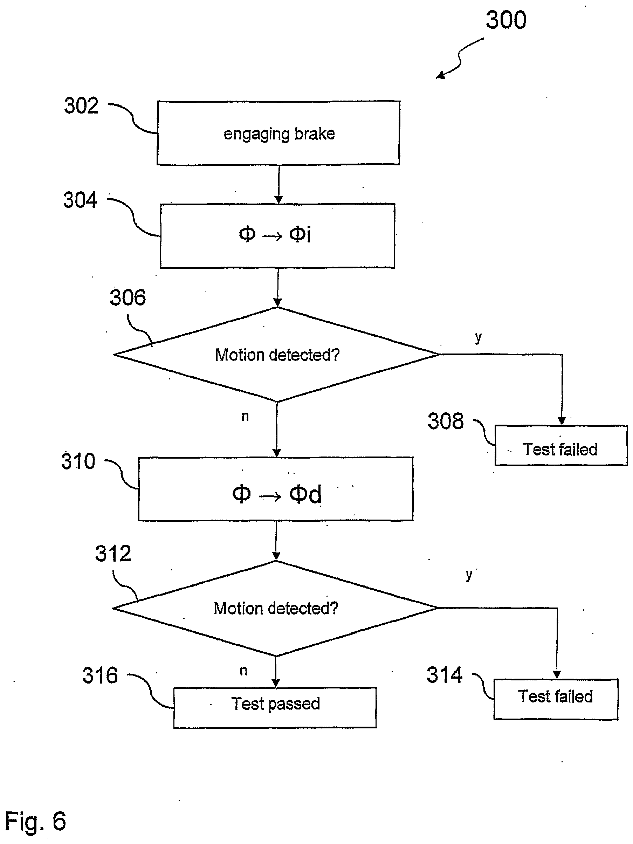

An alternative of the method according to the invention is depicted in Figs. 5 and 6. As can be seen in Fig. 5, a torque Φ is illustrated as a function of time t. A lower intermediate torque level (intermediate torque Φi) can be provided by the power source 70 before a higher decision torque level (decision torque Φd) is applied to the wheel. The power source 70 is preferably controlled by the system 150. The intermediate torque Φi can be close to the decision torque Φd, for example more than 50% of Φd or another appropriate percentage of Φd, depending on the specific vehicle application requirements.

As depicted in flowchart 300 in Fig. 6, when the operator activates the system 150 by operating the actuator 138, the system 150 activates the brake element 118 in step 302 with a brake force F. See also figure 2. Initially the output torque of the power source 70 corresponds to a torque applied to the wheel 100a which is below a predetermined torque level Φi, and the vehicle 10 and the ground engagement element 100a are in a stationary state. Thereafter the torque from the power source is increased.

In step 304, the power source 70 is driven to achieve a predetermined torque level applied on the wheel 100a, denoted as intermediate torque level Φi, which torque level is indicative for the performance of the brake element 118 under test. The intermediate torque level Φi is below to the nominal torque level Φd which can be provided by the brake element 118 under optimum conditions. The intermediate torque level Φi is preferably defined to secure that the vehicle 10 is safe to operate and the brake performance is within a defined margin fulfilling the requirements if the brake element can provide the intermediate torque level.

In step 306 it is determined if a motion of the vehicle 10 and/or of the ground engagement element 100a occurs when the intermediate torque level Φi is applied to the ground engagement element 100a under test. If the vehicle 10 and/or the ground engagement element 100a has moved ("y" in the flow chart), the brake element 118 has failed the test (step 308) and the test is aborted. If the vehicle 10 and/or the ground engagement element 100a has not moved ("n" in the flow chart), it is decided that the performance of the brake element 118 under test is good enough and within the desired limits of the intermediate torque level Φi and the test sequence is continued with step 310.

In step 310 the power source 70 is driven by the system 150 to achieve a higher predetermined decision torque level Φd applied on the wheel 100a. This torque level is indicative of the performance of the brake element 118 under optimum conditions.

In step 312 it is decided if a motion of the vehicle 10 and/or of the ground engagement element 100a has occurred when the decision torque level Φd is applied to the ground engagement element 100a with the brake element 118 under test. If the vehicle 10 and/or the ground engagement element 100a has moved ("y" in the flow chart), the brake element 118 has failed according to step 314 and the test is aborted. If the vehicle 10 and/or the ground engagement element 100a has not moved ("n" in the flow chart), it is decided that the performance of the brake element 118 under test is good enough and within the desired limits of the decision torque level Φd.

If the brake test was successful and the brake element 118 has passed the test, the display unit 136 of the system 150 illustrated in figure 2 indicates the results to the operator. If the test stage with the intermediate torque level Φi was passed but the test stage with the decision torque level Φd failed, the system 150 indicates that the vehicle 10 is safe but need brake service after some time, which can be given in more detail depending on e.g. the history of the vehicle 10.

If both test stages with intermediate and decision torque levels Φi and Φd were passed, the system 150 can indicate that the brake system has good performance.

If the test comprised only one test stage with the decision torque level Φd, the system 150 can indicate that the brake system is in order or not in order, depending on the test result.

The brake test method and system 150 can be used to test the complete brake system of the vehicle 10 or to test individual brake elements 118 of ground engagement elements, such as individual wheel brakes. The system 150 can then calculate the total performance of the brake system and/or indicate alternatively an eventual degradation or brake system failure.

It is to be understood that the present invention is not limited to the embodiments described above and illustrated in the drawings; rather, the skilled person will recognize that many changes and modifications may be made within the scope of the appended claims.

## Claims

1. A method for testing the braking capacity of one or more brake elements of a vehicle, the vehicle (10) comprising a power source (70) for propulsion of the vehicle and at least one ground engagement element (100a, 102a, 104a) driven by the power source, and at least one brake element (118) arranged for braking the vehicle by acting on a rotation component of the vehicle, **characterized by**
- activating said at least one brake element (118) by automatically applying a predetermined brake force (F),
- applying a predetermined decision torque level (Φd) to the rotation component by means of the power source (70) by automatically driving the power source (70) to achieve the decision torque level (Φd), after applying the predetermined brake force (F), by increasing the torque from the power source, wherein the decision torque level (Φd) is indicative for the braking capacity of said at least one brake element (118) when said predetermined brake force (F) is applied;
- determining whether or not there is a motion of the vehicle (10) and/or of said at least one ground engagement element (100a, 102a, 104a) when the decision torque level (Φd) is applied;
- deciding on the braking capacity of said at least one brake element (118).

2. A method according to claim 1, **characterized by** rating the test sequence as passed when no motion is detected and rating the test sequence as failed when a motion is detected.

3. A method according to one of the preceding claims, **characterized by** applying an intermediate torque level (Φi) before applying the decision torque level (Φd).

4. A method according to claim 3, **characterized by** determining a motion of the vehicle (10) and/or of said at least one ground engagement element (100a, 102a, 104a) when the intermediate torque level (Φi) is applied.

5. A method according to claim 4, **characterized by** rating the test sequence as passed when no motion is detected and rating the test sequence as failed when a motion is detected.

6. A method according to claim 5, **characterized by** applying the decision torque level (Φd) only if the test sequence is rated passed for the intermediate torque level (Φi).

7. A method according to one of the preceding claims, **characterized by** performing the test sequence for each brake element (118) arranged for braking a driven ground engagement element (100a, 102a, 104a) of the vehicle (10).

8. A method according to claim 7, **characterized by** calculating a total brake performance for the vehicle (10) based on results of the test sequences for each brake element (118).

9. A method according to one of the preceding claims, **characterized by** collecting results of test sequences for providing performance results for monitoring aging of said at least one brake element (118) and/or for providing performance results to a maintenance unit.

10. A method according to one of the preceding claims, **characterized by** emitting a performance status based on results of the test sequences for each brake element (118) to an operator.

11. A system for testing the braking capacity of one or more brake elements of a vehicle, the vehicle (10) comprising a power source (70) for propulsion of the vehicle and at least one ground engagement element (100a, 102a, 104a) driven by the power source, and at least one brake element (118) arranged for braking the vehicle by acting on a rotation component of the vehicle, **characterized in that** the system comprises a control unit for activating said at least one brake element (118) by applying a predetermined brake force (F), and a detection means for determining whether or not there is a motion of the vehicle (10) and/or of said at least one ground engagement element (100a, 102a, 104a) when a predetermined decision torque level (Φd) is applied to the rotation component by the power source, which decision torque level (Φd) is indicative for the braking capacity of said at least one brake element (118) when said predetermined brake force (F) is applied, wherein the control unit is arranged to automatically control the power source (70) to apply the decision torque level (Φd) by increasing the torque from the power source.

12. A computer program comprising program code means for performing all the steps of any one of the claims 1 to 10 when said program is run on a computer.

13. A computer readable medium comprising a computer program according to claim 12.

## Patentansprüche

1. Verfahren zum Testen der Bremskapazität eines oder mehrerer Bremselemente eines Fahrzeugs, wobei das Fahrzeug (10) eine Leistungsquelle (70) zum Antrieb des Fahrzeugs und wenigstens ein durch die Leistungsquelle angetriebenes Bodenangriffselement (100a, 102a, 104a), und wenigstens ein Bremselement (118) umfasst, das zum Bremsen des Fahrzeugs durch Einwirken auf eine Drehkomponente des Fahrzeugs angeordnet ist, **gekennzeichnet durch**
- Aktivieren des wenigstens einen Bremselements (118) durch automatisches Aufbringen einer vorgegebenen Bremskraft (F),
- Aufbringen eines vorgegebenen Entscheidungsdrehmomentniveaus (Φd) auf die Drehkomponente mittels der Leistungsquelle (70) durch automatisches Antreiben der Leistungsquelle (70), um das Entscheidungsdrehmomentniveau (Φd), nach dem Aufbringen der vorgegebenen Bremskraft (F) durch Erhöhen des Drehmoments von der Leistungsquelle zu erreichen, wobei das Entscheidungsdrehmomentniveau (Φd) für die Bremskapazität des wenigstens einen Bremselements (118) indikativ ist, wenn die vorgegebene Bremskraft (F) aufgebracht wird;
- Bestimmen, ob es eine Bewegung des Fahrzeugs (10) und/oder des wenigstens einen Bodenangriffselements (100a, 102a, 104a) gibt oder nicht, wenn das Entscheidungsdrehmomentniveau (Φd) aufgebracht wird;
- Entscheiden über die Bremskapazität des wenigstens einen Bremselements (118).

2. Verfahren nach Anspruch 1, **gekennzeichnet durch** Bewerten der Testsequenz als bestanden, wenn keine Bewegung erfasst wird, und Bewerten der Testsequenz als durchgefallen, wenn eine Bewegung erfasst wird.

3. Verfahren nach einem der vorhergehenden Ansprüche, **gekennzeichnet durch** Aufbringen eines Zwischendrehmomentniveaus (Φi) vor dem Aufbringen des Entscheidungsdrehmomentniveaus (Φd).

4. Verfahren nach Anspruch 3, **gekennzeichnet durch** Bestimmen einer Bewegung des Fahrzeugs (10) und/oder des wenigstens einen Bodenangriffselements (100a, 102a, 104a), wenn das Zwischendrehmomentniveau (Φi) aufgebracht wird.

5. Verfahren nach Anspruch 4, **gekennzeichnet durch** Bewerten der Testsequenz als bestanden, wenn keine Bewegung erfasst wird, und Bewerten der Testsequenz als durchgefallen, wenn eine Bewegung erfasst wird.

6. Verfahren nach Anspruch 5, **gekennzeichnet durch** Aufbringen des Entscheidungsdrehmomentniveaus (Φd) nur, falls die Testsequenz für das Zwischendrehmomentniveau (Φi) als bestanden bewertet wird.

7. Verfahren nach einem der vorhergehenden Ansprüche, **gekennzeichnet durch** Durchführen der Testsequenz für jedes Bremselement (118), das zum Bremsen eines angetriebenen Bodenangriffselements (100a, 102a, 104a) des Fahrzeugs (10) angeordnet ist.

8. Verfahren nach Anspruch 7, **gekennzeichnet durch** Berechnen einer Gesamtbremsleistung für das Fahrzeug (10) basierend auf Ergebnissen der Testsequenzen für jedes Bremselement (118).

9. Verfahren nach einem der vorhergehenden Ansprüche, **gekennzeichnet durch** Sammeln von Ergebnissen von Testsequenzen zum Bereitstellen von Leistungsergebnissen zum Überwachen einer Alterung des wenigstens einen Bremselements (118) und/oder zum Bereitstellen von Leistungsergebnissen für eine Wartungseinheit.

10. Verfahren nach einem der vorhergehenden Ansprüche, **gekennzeichnet durch** Ausgeben eines Leistungsstatus basierend auf Ergebnissen der Testsequenzen für jedes Bremselement (118) für eine Bedienungsperson.

11. System zum Testen der Bremskapazität eines oder mehrerer Bremselemente eines Fahrzeugs, wobei das Fahrzeug (10) eine Leistungsquelle (70) zum Antrieb des Fahrzeugs und wenigstens ein durch die Leistungsquelle angetriebenes Bodenangriffselement (100a, 102a, 104a), und wenigstens ein Bremselement (118) umfasst, das zum Bremsen des Fahrzeugs durch Einwirken auf eine Drehkomponente des Fahrzeugs angeordnet ist, **dadurch gekennzeichnet, dass** das System eine Steuereinheit zum Aktivieren des wenigstens einen Bremselements (118) durch Aufbringen einer vorgegebenen Bremskraft (F), und eine Erfassungseinrichtung zum Bestimmen umfasst, ob es eine Bewegung des Fahrzeugs (10) und/oder des wenigstens einen Bodenangriffselements (100a, 102a, 104a) gibt oder nicht, wenn ein vorgegebenes Entscheidungsdrehmomentniveau (Φd) durch die Leistungsquelle auf die Drehkomponente aufgebracht wird, wobei das Entscheidungsdrehmomentniveau (Φd) für die Bremskapazität des wenigstens einen Bremselements (118) indikativ ist, wenn die vorgegebene Bremskraft (F) aufgebracht wird, wobei die Steuereinheit dazu angeordnet ist, die Leistungsquelle (70) automatisch zu steuern, um durch Erhöhen des Drehmoments von der Leistungsquelle das Entscheidungsdrehmomentniveau (Φd) aufzubringen.

12. Computerprogramm umfassend Programmcodemittel zum Durchführen aller Schritte nach einem der Ansprüche 1 bis 10, wenn das Programm auf einem Computer läuft.

13. Computerlesbares Medium umfassend ein Computerprogramm gemäß Anspruch 12.

## Revendications

1. Procédé pour tester la capacité de freinage d'un ou de plusieurs élément(s) de frein d'un véhicule, le véhicule (10) comprenant une source de puissance (70) pour la propulsion du véhicule et au moins un élément d'engagement avec le sol (100a, 102a, 104a) entraîné par la source de puissance et au moins un élément de frein (118) agencé pour freiner le véhicule en agissant sur un composant de rotation du véhicule, **caractérisé par** le fait
- d'activer ledit au moins un élément de frein (118) en appliquant automatiquement une force de freinage prédéterminée (F),
- d'appliquer un niveau de couple de décision prédéterminé (Φd) au composant de rotation au moyen de la source de puissance (70) en entraînant automatiquement la source de puissance (70) pour atteindre le niveau de couple de décision (Φd), après l'application de la force de freinage prédéterminée (F), en augmentant le couple de la source de puissance, où le niveau de couple de décision (Φd) indique la capacité de freinage dudit au moins un élément de frein (118) lorsque ladite force de freinage prédéterminée (F) est appliquée ;
- de déterminer s'il existe ou non un mouvement du véhicule (10) et/ou dudit au moins un élément d'engagement avec le sol (100a, 102a, 104a) lorsque le niveau de couple de décision (Φd) est appliqué ;
- de décider de la capacité de freinage dudit au moins un élément de frein (118).

2. Procédé selon la revendication 1, **caractérisé par** l'évaluation de la séquence de test comme étant réussie lorsqu'aucun mouvement n'est détecté et l'évaluation de la séquence de test comme étant échouée lorsqu'un mouvement est détecté.

3. Procédé selon l'une des revendications précédentes, **caractérisé par** l'application d'un niveau de couple intermédiaire (Φi) avant l'application du niveau de couple de décision (Φd).

4. Procédé selon la revendication 3, **caractérisé par** la détermination d'un mouvement du véhicule (10) et/ou dudit au moins un élément d'engagement avec le sol (100a, 102a, 104a) lorsque le niveau de couple intermédiaire (Φi) est appliqué.

5. Procédé selon la revendication 4, **caractérisé par** l'évaluation de la séquence de test comme étant réussie lorsqu'aucun mouvement n'est détecté et l'évaluation de la séquence de test comme étant échouée lorsqu'un mouvement est détecté.

6. Procédé selon la revendication 5, **caractérisé par** l'application du niveau de couple de décision (Φd) uniquement si la séquence de test est évaluée comme étant réussie pour le niveau de couple intermédiaire (Φi).

7. Procédé selon l'une des revendications précédentes, **caractérisé par** la réalisation de la séquence de test pour chaque élément de frein (118) agencé pour freiner un élément d'engagement avec le sol entraîné (100a, 102a, 104a) du véhicule (10).

8. Procédé selon la revendication 7, **caractérisé par** le calcul d'une performance de freinage totale pour le véhicule (10) sur la base des résultats des séquences de test pour chaque élément de frein (118).

9. Procédé selon l'une des revendications précédentes, **caractérisé par** la collecte de résultats de séquences de test pour fournir des résultats de performance pour surveiller le vieillissement dudit au moins un élément de frein (118) et/ou pour fournir des résultats de performance à une unité de maintenance.

10. Procédé selon l'une des revendications précédentes, **caractérisé par** l'émission d'un état de performance sur la base des résultats des séquences de test pour chaque élément de frein (118) à un opérateur.

11. Système pour tester la capacité de freinage d'un ou de plusieurs élément(s) de frein d'un véhicule, le véhicule (10) comprenant une source de puissance (70) pour la propulsion du véhicule et au moins un élément d'engagement avec le sol (100a, 102a, 104a) entraîné par la source de puissance et au moins un élément de frein (118) agencé pour freiner le véhicule en agissant sur un composant de rotation du véhicule, **caractérisé en ce que** le système comprend une unité de commande pour activer ledit au moins un élément de frein (118) en appliquant une force de freinage prédéterminée (F), et un moyen de détection pour déterminer s'il existe ou non un mouvement du véhicule (10) et/ou dudit au moins un élément d'engagement avec le sol (100a, 102a, 104a) lorsqu'un niveau de couple de décision prédéterminé (Φd) est appliqué au composant de rotation par la source de puissance, lequel niveau de couple de décision (Φd) indique la capacité de freinage dudit au moins un élément de frein (118) lorsque ladite force de freinage prédéterminée (F) est appliquée, où l'unité de commande est agencée pour commander automatiquement la source de puissance (70) pour appliquer le niveau de couple de décision (Φd) en augmentant le couple de la source de puissance.

12. Programme informatique comprenant un moyen de code de programme pour réaliser toutes les étapes de l'une quelconque des revendications 1 à 10 lorsque ledit programme est exécuté sur un ordinateur.

13. Support lisible par ordinateur comprenant un programme informatique selon la revendication 12.
